(19) Europäisches Patentamt

European Patent Office

Office européen des brevets

(11) **EP 1 649 741 A1**

(12) **DEMANDE DE BREVET EUROPEEN**

(43) Date de publication:
26.04.2006 Bulletin 2006/17

(51) Int Cl.:
*A01D 69/00* (2006.01)     *A01D 34/00* (2006.01)
*F04B 27/18* (2006.01)

(21) Numéro de dépôt: 05360006.0

(22) Date de dépôt: **08.02.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **20.10.2004 FR 0411166**

(71) Demandeur: **Etesia (Société à Responsabilité Limitée)**
**67160 Wissembourg (FR)**

(72) Inventeurs:
- **Siegel, Christophe**
  **67240 Gries (FR)**
- **Schmitt, Freddy**
  **67250 Lampertsloch (FR)**

(74) Mandataire: **Nuss, Pierre et al**
**Cabinet Nuss**
**10, rue Jacques Kablé**
**67080 Strasbourg Cédex (FR)**

(54) **Dispositif de correction de débit pour pompe hydraulique**

(57)     La présente invention concerne un dispositif de correction de débit (6) pour pompe hydraulique à débit variable et commande mécanique équipant une transmission hydraulique pour un engin automoteur du type à régime constant comportant un ou plusieurs moteurs hydrauliques (1) alimentés par une ou plusieurs pompes (2) uni- ou bi-directionnelles à débit variable et à commande mécanique par l'intermédiaire d'un dispositif (4) constitué par une pédale ou un levier de commande (5) et par un dispositif de correction de débit (6) relié, d'une part, à la pédale ou au levier de commande (5) et, d'autre part, au levier (2') en prise avec l'arbre de commande de la ou des pompes (2), la ou lesdites pompes (2) étant entraînées par l'intermédiaire d'un moteur thermique (3).

Dispositif caractérisé en ce qu'il consiste en un moyen mécanique élastiquement déformable agissant directement sur l'arbre de commande de la ou des pompes hydrauliques (2).

L'invention est plus particulièrement applicable dans le domaine des engins automoteurs pourvus d'une transmission hydraulique à un ou plusieurs moteurs hydrauliques.

Fig. 1

**Description**

La présente invention concerne le domaine des engins automoteurs pourvus d'une transmission hydraulique à un ou plusieurs moteurs hydrauliques alimentés par une ou plusieurs pompes hydrauliques uni- ou bi-directionnelles à débit variable et commande mécanique entraînées par un moteur thermique et a pour objet un dispositif de correction de débit pour de telles pompes hydrauliques.

Une transmission hydraulique de type connu pour un engin automoteur du type à régime constant comporte un ou plusieurs moteurs hydrauliques alimentés par une ou plusieurs pompes uni- ou bi-directionnelles à débit variable et à commande mécanique, la ou lesdites pompes étant entraînées par l'intermédiaire d'un moteur thermique. En fonctionnement, le régime du moteur thermique peut baisser fortement, voire aboutir à un calage, si la puissance absorbée par le ou les moteurs hydrauliques est supérieure à la puissance développée par le moteur thermique d'entraînement de la ou des pompes d'alimentation du ou desdits moteurs hydrauliques.

La commande de la ou des pompes à débit variable s'effectue mécaniquement par l'intermédiaire d'un dispositif actionné au pied ou à la main. Avec une telle transmission, la puissance devant être fournie par le moteur thermique est, au rendement près, égale à la puissance hydraulique restituée par la ou les pompes hydrauliques suivant l'équation :

$$P \approx (Q \times p) / 600,$$

dans laquelle :

P est la puissance hydraulique, en kW restituée par la ou les pompes hydrauliques,
Q est le débit hydraulique en 1/min de la ou des pompes hydrauliques et
p est la pression de service en bars de la ou des pompes hydrauliques.

La pression p est directement proportionnelle au couple nécessaire sur la roue correspondante de l'engin automoteur.

Il résulte de ce qui précède que plus la pente à gravir par l'engin est grande, c'est-à-dire plus le couple sur la roue augmente, plus la pression p augmente et, en conséquence, la puissance à transmettre par la ou les pompes hydrauliques est grande, à débit Q fixe. Il s'ensuit que la puissance demandée au moteur thermique augmente dans les mêmes proportions.

Si en même temps, l'opérateur donne une consigne de vitesse maximale par un actionnement à fond de la commande mécanique de la pompe hydraulique, par exemple d'une pédale, alors le moteur thermique subit une forte perte de régime pouvant aboutir à son calage.

Les engins automoteurs ainsi équipés sont souvent des engins destinés à effectuer des travaux tels que des travaux d'entretien, par exemple d'espaces verts, donc une tonte d'herbe et doivent assurer une vitesse d'entraînement constante des accessoires dont ils sont équipés, en particulier des moyens de coupe. Or si le régime du moteur subit une baisse relativement importante, cette baisse de régime influe directement sur la vitesse des organes de coupe, qui tournent donc moins vite, de sorte que la performance de coupe est nettement amoindrie.

Il en résulte, d'une part, une coupe moins régulière de l'herbe et, d'autre part, en présence d'une herbe drue et relativement haute, un risque de bourrage du système de coupe précipitant encore davantage la baisse de régime du moteur d'entraînement et son calage.

Pour obvier à ces inconvénients, il a été proposé différents dispositifs de régulation de la puissance de la ou des pompes hydrauliques mettant en oeuvre des capteurs de pression et des moyens de commande électriques, électroniques ou hydrauliques du débit de la ou des pompes permettant de tenir compte des variations de pression de service et/ou des variations correspondantes du couple sur le levier de commande de la ou des pompes hydrauliques.

Cependant, si de tels dispositifs permettent d'obtenir des résultats satisfaisants, leur mise en oeuvre est relativement coûteuse et est incompatible avec une utilisation sur des engins de taille et de puissance relativement faibles et dont le prix d'achat ainsi que le coût d'utilisation doivent être maintenus dans des limites acceptables. De plus, la maintenance de tels engins doit également être la plus simple possible, ce qui est incompatible en présence de capteurs électro-hydrauliques et de moyens de commande électriques, électroniques ou hydrauliques.

La présente invention a pour but de pallier ces inconvénients en proposant un dispositif de correction de débit pour pompe hydraulique à débit variable et commande mécanique permettant d'agir de manière simple et efficace sur le débit de la pompe, afin de garantir un régime constant du moteur thermique d'entraînement de ladite pompe.

A cet effet, le dispositif de correction de débit pour pompe hydraulique à débit variable et commande mécanique, conforme à l'invention, qui équipe une transmission hydraulique pour un engin automoteur du type à régime constant comportant un ou plusieurs moteurs hydrauliques alimentés par une ou plusieurs pompes uni- ou bi-directionnelles à débit variable et à commande mécanique, la ou lesdites pompes étant entraînées par l'intermédiaire d'un moteur thermique, est caractérisé en ce qu'il consiste en un moyen mécanique élastiquement déformable agissant directement sur l'arbre de commande de la ou des pompes hydrauliques.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

la figure 1 est une vue schématique d'une transmission hydraulique équipée du dispositif de correction de débit conforme à l'invention ;

les figures 2 et 3 sont des vues partielles représentant schématiquement le fonctionnement du dispositif de correction de débit conforme à l'invention en configuration de marche avant, respectivement en position normale non corrigée (figure 2) et en position de charge corrigée (figure 3), et

les figures 4 et 5 sont des vues analogues à celles des figures 2 et 3 le dispositif étant en configuration de marche arrière.

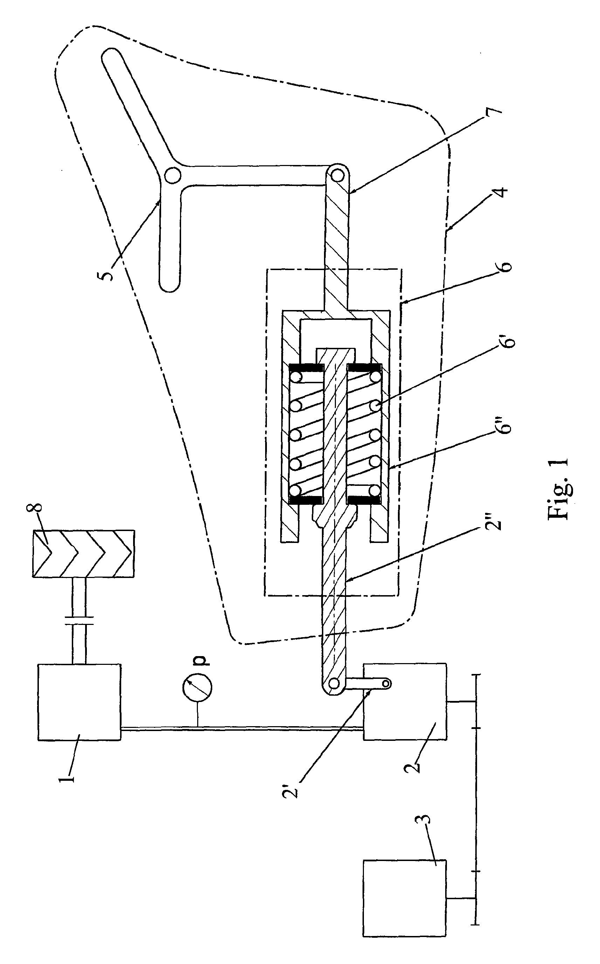

La figure 1 des dessins annexés représente une transmission hydraulique pour un engin automoteur du type à régime constant comportant un ou plusieurs moteurs hydrauliques 1 alimentés par une ou plusieurs pompes 2 uni- ou bi-directionnelles à débit variable et à commande mécanique par l'intermédiaire d'un levier 2' en prise avec l'arbre de commande de la ou des pompes 2, la ou lesdites pompes 2 étant entraînées par l'intermédiaire d'un moteur thermique 3.

La commande mécanique de la ou des pompes 2 est effectuée par l'intermédiaire d'un dispositif 4 constitué par une pédale ou un levier de commande 5 et par un dispositif de correction de débit 6 relié, d'une part, à la pédale ou au levier de commande 5 et, d'autre part, au levier 2' en prise avec l'arbre de commande de la ou des pompes 2.

Conformément à l'invention, le dispositif de correction de débit 6 consiste en un moyen mécanique élastiquement déformable agissant directement sur l'arbre de commande de la ou des pompes hydrauliques 2.

Selon une caractéristique de l'invention, le moyen mécanique élastiquement déformable agissant directement sur l'arbre de commande de la ou des pompes hydrauliques 2 se présente avantageusement sous forme d'un ensemble télescopique à longueur variable sous la charge d'un ressort. A cet effet, cet ensemble télescopique formant le dispositif de correction de débit 6 est constitué par un ressort de compression 6' précontraint entre deux rondelles montées, d'une part, axialement glissantes sur une biellette 2" et en appui extérieur sur des arrêts axiaux de cette biellette 2", reliée à articulation par l'une de ses extrémités au levier 2' de l'arbre de commande de la ou des pompes 2 et, d'autre part, toujours de manière axialement glissantes dans un carter de guidage 6" et également en appui extérieur sur des arrêts axiaux de ce carter de guidage 6", constituant l'extrémité d'une biellette 7 qui est articulée, du côté opposé au carter 6", sur la pédale ou le levier de commande 5. Une telle constitution du dispositif de correction de débit 6 permet la transmission, dans les deux sens, à partir de la pédale ou du levier de commande 5 vers le levier 2' de la ou des pompes hydrauliques, d'un effort prédéterminé par le choix des caractéristiques du ressort 6', et permet, lorsque l'effort résistant généré par l'accroissement de la pression de service dépasse la valeur prédéterminée, une variation automatique de la longueur X entre les articulations de la biellette 2" sur le levier 2 et de la biellette 7 sur la pédale ou le levier de commande 5.

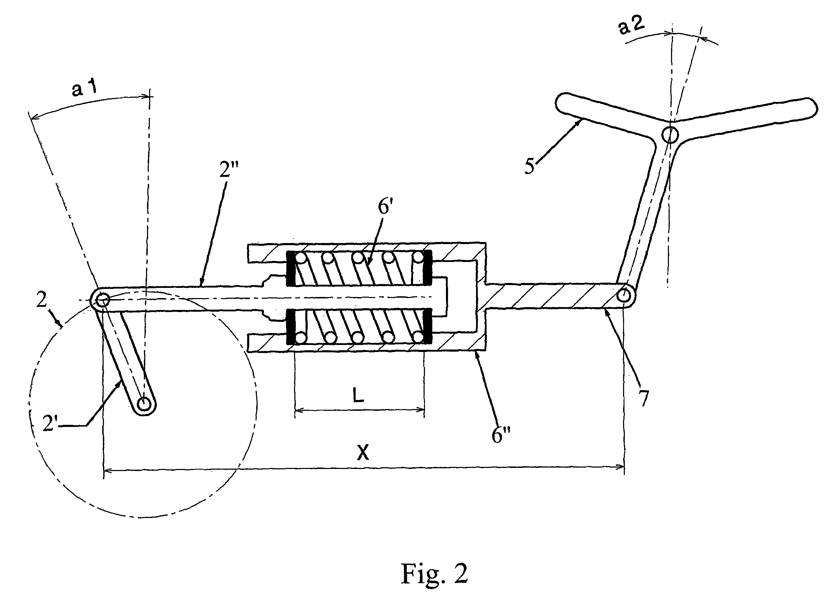

La figure 2 des dessins annexés représente schématiquement le dispositif conforme à l'invention en position de fonctionnement, par exemple pour la commande d'une ou de plusieurs pompes hydrauliques 2 au moyen du levier 2', par l'intermédiaire d'une pédale de commande 5. Dans la position représentée à la figure 2, la transmission hydraulique est destinée à permettre la marche avant d'un engin et la pédale 5 est dans une position extrême de commande de débit hydraulique maximal de la ou des pompes hydrauliques 2, dans laquelle ladite pédale 5 est pivotée d'un angle a2, alors que le levier 2' de l'arbre de commande de la ou des pompes 2 est déplacé d'un angle al, la distance entre les articulations de la biellette 2" sur le levier 2' et de la biellette 7 sur la pédale ou levier 5 étant égale, en position normale de marche de l'engin, c'est-à-dire en l'absence d'obstacles à une constante X.

Les engins équipés d'un tel dispositif de transmission hydraulique sont, comme déjà indiqué plus haut, généralement équipés d'accessoires de travail, qui sont reliés directement ou par l'intermédiaire d'embrayages à l'arbre de sortie du moteur thermique 3 et qui doivent le plus souvent être entraînés au régime maximal dudit moteur thermique 3. Il convient donc que, quelle que soit la charge exercée sur le ou les moteurs hydrauliques 1 entraînés par la ou les pompes hydrauliques 2, le régime du moteur thermique reste immuable et ne soit donc soumis qu'à une très faible variation.

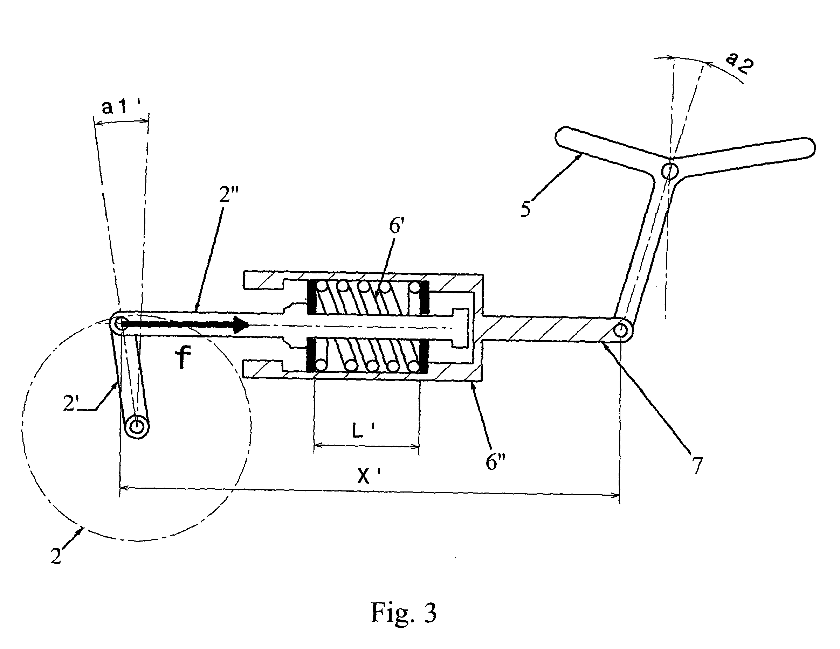

Si l'engin aborde une difficulté, par exemple lors d'un travail en côte, le couple d'entraînement exercé sur ses roues d'entraînement 8 augmente. Il s'ensuit que la pression p en sortie de la ou des pompes hydrauliques 2 augmente, alors que l'opérateur maintient son action sur la pédale de commande 5, dont la position reste donc fixe. L'augmentation de cette pression p a alors pour effet d'augmenter le couple résistant du levier de commande 2' de la ou des pompes hydrauliques 2 et d'augmenter la force f s'exerçant sur la biellette 2" et, en conséquence, de provoquer un rétrécissement de la longueur L du ressort 6' logé dans le carter 6" du dispositif 6 (figure 3) en L'. Par cette suite de réactions, la distance X entre les articulations de la biellette 2" sur le levier 2' et de la biellette 7 sur la pédale ou levier 5 diminue et devient X', avec pour conséquence une diminution de l'angle a1 en a1', ce qui a pour effet d'entraîner une diminution du débit Q à la sortie de la ou des pompes hydrauliques 2.

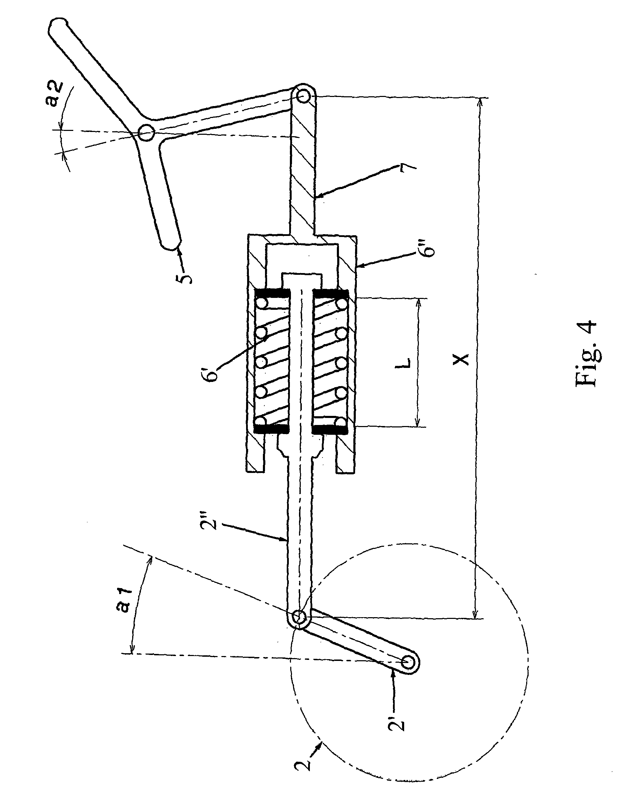

La figure 4 des dessins annexés est une représentation identique à celle de la figure 2, dans laquelle la transmission hydraulique est dans une position destinée à permettre la marche arrière d'un engin et la pédale 5 est dans une position extrême de commande de débit hydraulique maximal de la ou des pompes hydrauliques 2, dans laquelle ladite pédale 5 est pivotée d'un angle a2 inverse de celui représenté à la figure 2, alors que le levier 2' de l'arbre de commande de la ou des pompes 2 est déplacé d'un angle a1 également inverse de celui représenté à la figure 2, la distance entre les articulations de la biellette 2" sur le levier 2' et de la biellette 7 sur la pédale ou levier 5 restant identique à la constante X.

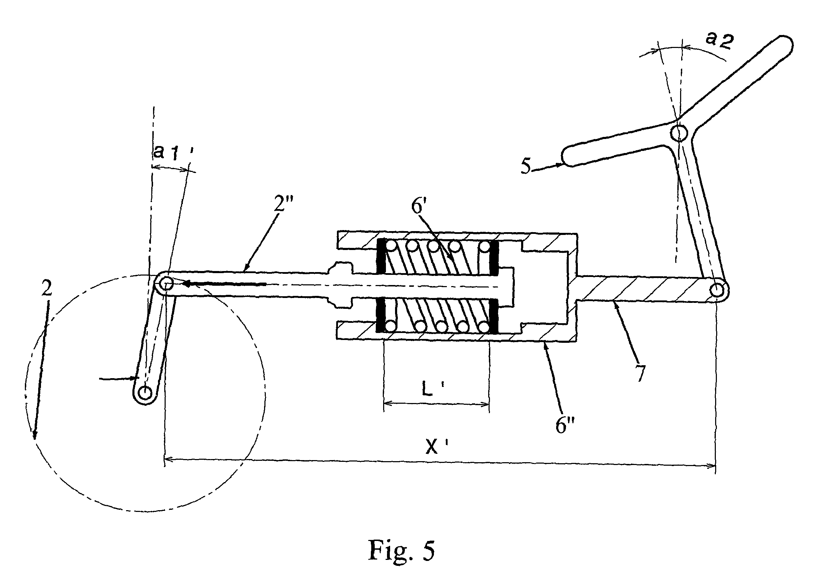

En cas de modification des conditions de circulation, comme représenté à la figure 5, c'est-à-dire lorsque le couple exercé par la roue 8 augmente, l'augmentation de la pression p à la sortie de la ou des pompes hydrauliques 2, alors que la pédale ou levier de commande 5 reste appuyé à fond, c'est-à-dire l'angle a2 reste constant, en conséquence la force f dans la biellette 2" augmente et entraîne un déplacement du levier 2' solidaire de l'arbre de commande de la pompe 2 vers la gauche sur la figure 5, suite à une contraction du ressort 6' dont la longueur L diminue en L', de sorte que la distance X entre les articulations de la biellette2" sur le levier 2' et de la biellette 7 sur la pédale ou levier 5 augmente en X', ce qui a pour effet une diminution de l'angle a1 en a1' et une diminution du débit Q de la ou des pompes 2.

Les déplacements décrits ci-dessus de la biellette 2" et du levier 2' solidaire de l'arbre de commande de la ou des pompes 2 sont donc parfaitement contrôlés par le dispositif 6 qui permet, par la diminution ou l'augmentation de la distance X une diminution du débit Q, éventuellement contre l'action de l'opérateur sur la pédale ou levier de commande 5. La diminution de la pression en sortie de la ou des pompes hydrauliques 2 entraîne automatiquement un retour du débit à sa valeur initiale de consignes, de sorte qu'une régulation de la puissance demandée au moteur thermique est garantie.

En effet, l'invention se base sur le fait que le couple à exercer sur l'arbre de commande de la pompe 2, en prise avec le levier augmente proportionnellement à la pression p nécessaire à l'obtention du couple requis sur la roue 8 d'un engin pour le franchissement d'un obstacle ou pente.

Selon une variante de réalisation de l'invention, non représentée aux dessins annexés, le ressort de compression 6' de l'ensemble télescopique à longueur variable peut être remplacé par deux ressorts identiques agissant de part et d'autre d'un disque d'appui prévu à une extrémité de la biellette 2" reliée à articulation par son autre extrémité, au levier 2' de l'arbre de commande de la ou des pompes 2, ledit disque d'appui étant guidé dans le carter de guidage 6" solidaire de la biellette 7, articulée sur la pédale ou le levier de commande 5.

Selon une autre variante de réalisation de l'invention, non représentée aux dessins annexés, le moyen mécanique élastiquement déformable agissant directement sur l'arbre de commande de la ou des pompes hydrauliques 2 formant le dispositif de correction de débit 6 peut également être constitué sous forme d'une pièce monobloc, métallique ou autre, élastiquement déformable, obtenue par usinage ou par formage. Ainsi, le dispositif 6 pourrait être réalisé par mise en oeuvre d'une lame en acier à ressort présentant une ou plusieurs pliures pour former une biellette déformable. Une telle biellette pourrait évidemment aussi être obtenue par usinage d'une pièce de forme favorisant une déformation élastique.

Ce moyen mécanique peut aussi être réalisé en un élément monobloc en matière synthétique à propriétés élastiques ou en caoutchouc naturel ou synthétique. Dans un tel cas, le dispositif sera simplement constitué sous forme d'une barre de section quelconque, régulière ou non.

Grâce à l'invention, il est possible de réaliser un dispositif de correction de débit sous forme d'un dispositif mécanique simple et peu onéreux, permettant de maintenir le régime d'un moteur thermique 4 constant, ce par régulation du débit de la ou des pompes hydrauliques d'une transmission hydraulique, indépendamment de la consigne de vitesse d'avancement imposée par l'opérateur au moyen de la pédale ou levier de commande 5.

Ainsi, même quand la pédale ou le levier de commande est déplacé dans une position de consigne imposant à la pompe de délivrer son débit maximal durant le franchissement d'une pente, le moteur thermique gardera un régime constant, de sorte que l'ensemble des accessoires entraînés par celui-ci continueront d'être entraînés à vitesse constante.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

**Revendications**

1. Dispositif de correction de débit (6) pour pompe hydraulique à débit variable et commande mécanique équipant une transmission hydraulique pour un engin automoteur du type à régime constant comportant un ou plusieurs moteurs hydrauliques (1) alimentés par une ou plusieurs pompes (2) uni- ou bidirectionnelles à débit variable et à commande mécanique par l'intermédiaire d'un dispositif (4) constitué par une pédale ou un levier de commande (5) et par un dispositif de correction de débit (6) relié, d'une part, à la pédale ou au levier de commande (5) et, d'autre part, au levier (2') en prise avec l'arbre de commande de la ou des pompes (2), la ou lesdites pompes (2) étant entraînées par l'intermédiaire d'un moteur thermique (3), **caractérisé en ce qu'**il consiste en un moyen mécanique élastiquement déformable agissant directement sur l'arbre de commande de la ou des pompes hydrauliques (2).

**2.** Dispositif, suivant la revendication 1, **caractérisé en ce que** le moyen mécanique élastiquement déformable agissant directement sur l'arbre de commande de la ou des pompes hydrauliques (2) se présente sous forme d'un ensemble télescopique à longueur variable sous la charge d'un ressort.

**3.** Dispositif, suivant la revendication 2, **caractérisé en ce que** l'ensemble télescopique formant le dispositif de correction de débit (6) est constitué par un ressort de compression (6') précontraint entre deux rondelles montées, d'une part, axialement glissantes sur une biellette (2") et en appui extérieur sur des arrêts axiaux de cette biellette (2"), reliée à articulation par l'une de ses extrémités au levier (2') de l'arbre de commande de la ou des pompes (2) et, d'autre part, toujours de manière axialement glissantes dans un carter de guidage (6") et également en appui extérieur sur des arrêts axiaux de ce carter de guidage (6"), constituant l'extrémité d'une biellette (7) qui est articulée, du côté opposé au carter (6"), sur la pédale ou le levier de commande (5).

**4.** Dispositif, suivant la revendication 3, **caractérisé en ce que** le ressort de compression (6') de l'ensemble télescopique à longueur variable est remplacé par deux ressorts identiques agissant de part et d'autre d'un disque d'appui prévu à une extrémité de la biellette (2") reliée à articulation par son autre extrémité, au levier (2') de l'arbre de commande de la ou des pompes (2), ledit disque d'appui étant guidé dans le carter de guidage (6") solidaire de la biellette (7), articulée sur la pédale ou le levier de commande (5).

**5.** Dispositif, suivant la revendication 1, **caractérisé en ce que** le moyen mécanique élastiquement déformable agissant directement sur l'arbre de commande de la ou des pompes hydrauliques (2) formant le dispositif de correction de débit (6) est constitué sous forme d'une pièce monobloc, métallique ou autre, élastiquement déformable, obtenue par usinage ou par formage.

**6.** Dispositif, suivant la revendication 1, **caractérisé en ce que** le moyen mécanique élastiquement déformable agissant directement sur l'arbre de commande de la ou des pompes hydrauliques (2) formant le dispositif de correction de débit (6) est constitué sous forme d'un élément monobloc en matière synthétique à propriétés élastiques ou en caoutchouc naturel ou synthétique.

Fig. 1

Fig. 2

Fig. 3

EP 1 649 741 A1

Fig. 4

Fig. 5

Office européen
des brevets

**RAPPORT DE RECHERCHE EUROPEENNE**

Numéro de la demande

EP 05 36 0006

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 3 659 618 A (WALTER KOBALD ET AL) 2 mai 1972 (1972-05-02) * abrégé; figure * * colonne 2, ligne 19 - colonne 2, ligne 27 * * colonne 3, ligne 6 - colonne 3, ligne 72 * | 1-6 | A01D69/00 A01D34/00 F04B27/18 |
| | ----- | | |
| X | GB 925 310 A (ARNOLD PITT; TADEUSZ BUDZICH) 8 mai 1963 (1963-05-08) * page 1, colonne 1, ligne 23 - page 1, colonne 1, ligne 30; figures 3-6 * * page 4, colonne 2, ligne 105 - page 8, colonne 2, ligne 115 * | 1-6 | |
| | ----- | | |
| X | US 6 036 597 A (ARNER ET AL) 14 mars 2000 (2000-03-14) * abrégé; figures * | 1 | |
| | ----- | | |
| A | FR 2 658 131 A (ETESIA SCS) 16 août 1991 (1991-08-16) * le document en entier * | 1-6 | **DOMAINES TECHNIQUES RECHERCHES (Int.Cl.7)** A01D F04B |
| | ----- | | |

Le présent rapport a été établi pour toutes les revendications

| Lieu de la recherche | Date d'achèvement de la recherche | Examinateur |
|---|---|---|
| Munich | 3 août 2005 | Pinna, S |

**ANNEXE AU RAPPORT DE RECHERCHE EUROPEENNE
RELATIF A LA DEMANDE DE BREVET EUROPEEN NO.**

EP 05 36 0006

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-08-2005

| Document brevet cité au rapport de recherche | | Date de publication | Membre(s) de la famille de brevet(s) | | Date de publication |
|---|---|---|---|---|---|
| US 3659618 | A | 02-05-1972 | DE | 1806677 A1 | 02-07-1970 |
| | | | FR | 2022440 A5 | 31-07-1970 |
| | | | GB | 1288260 A | 06-09-1972 |
| | | | JP | 49008674 B | 27-02-1974 |
| GB 925310 | A | 08-05-1963 | AUCUN | | |
| US 6036597 | A | 14-03-2000 | EP | 0914765 A1 | 12-05-1999 |
| FR 2658131 | A | 16-08-1991 | FR | 2658131 A3 | 16-08-1991 |

EPO FORM P0460

Pour tout renseignement concernant cette annexe : voir Journal Officiel de l'Office européen des brevets, No.12/82